Europäisches Patentamt

European Patent Office

Office européen des brevets

(19)

(11) **EP 0 868 660 B1**

(12) **EUROPÄISCHE PATENTSCHRIFT**

(45) Veröffentlichungstag und Bekanntmachung des Hinweises auf die Patenterteilung:
**22.10.2003   Patentblatt 2003/43**

(21) Anmeldenummer: **96946321.5**

(22) Anmeldetag: **03.12.1996**

(51) Int Cl.$^7$: **G01M 15/00**

(86) Internationale Anmeldenummer:
**PCT/DE96/02315**

(87) Internationale Veröffentlichungsnummer:
**WO 97/022786 (26.06.1997 Gazette 1997/27)**

(54) **VERFAHREN ZUR ERKENNUNG ZYKLISCHER VERBRENNUNGSSCHWANKUNGEN BEI EINER BRENNKRAFTMASCHINE**

PROCESS FOR DETECTING CYCLICAL FLUCTUATIONS IN COMBUSTION IN AN INTERNAL COMBUSTION ENGINE

PROCEDE POUR DETECTER DES FLUCTUATIONS CYCLIQUES DE LA COMBUSTION DANS UN MOTEUR A COMBUSTION INTERNE

(84) Benannte Vertragsstaaten:
**DE FR GB SE**

(30) Priorität: **21.12.1995   DE 19548059**

(43) Veröffentlichungstag der Anmeldung:
**07.10.1998   Patentblatt 1998/41**

(73) Patentinhaber: **SIEMENS AKTIENGESELLSCHAFT
80333 München (DE)**

(72) Erfinder:
• **ANGERMAIER, Anton
D-84172 Thann (DE)**
• **SCHNEIDER, Stefan
D-93173 Wenzenbach (DE)**

(56) Entgegenhaltungen:
**EP-A- 0 576 705        US-A- 5 041 980
US-A- 5 446 664        US-A- 5 574 217**

**Beschreibung**

Die Erfindung betrifft ein Verfahren zur Erkennung zyklischer Verbrennungsschwankungen bei einer Brennkraftmaschine gemäß dem Oberbegriff des Patentanspruches 1.

Der Betrieb von Brennkraftmaschinen mit mageren Gemischen und/oder hohen Abgasrückführraten bietet eine gute Möglichkeit zur Senkung des Kraftstoffverbrauches und der Stickoxidemissionen. Extrem magere Gemische, wie sie bei Magermotoren mit typischen Luftzahlen um $\lambda \approx 1,4$ auftreten oder ein hoher Anteil an Inertgasen im Gemisch aufgrund der Abgasrückführung haben jedoch eine erschwerte Entflammbarkeit des Gemisches zur Folge, was zur Zunahme von zyklischen Verbrennungsschwankungen bis hin zu Verbrennungsaussetzern bei zu hohen Rückführraten oder zu mageren Gemischen führen kann.

Zum sicheren Betrieb der Brennkraftmaschinen bei hohen Rückführraten oder mageren Gemischen ist deshalb eine Erfassung und Bewertung der zyklischen Verbrennungsschwankungen erforderlich. Die meßtechnische Erfassung der Verbrennung im Zylinder einer Brennkraftmaschine kann dabei durch Messung des Zylinderdruckverlaufes mit anschließender Berechnung charakteristischer Größen wie z.B. dem indizierten Mitteldruck erfolgen. Die zyklischen Schwankungen dieser Größen sind dabei direkt proportional zu den zyklischen Verbrennungsschwankungen.

Zur Detektion von Verbrennungsaussetzern kann bekannterweise die Kurbelwellengeschwindigkeit gemessen und ausgewertet werden. Es wird dabei die Zeitspanne gemessen, während der sich die Kurbelwelle um eine bestimmte Winkelspanne, auch als Segment bezeichnet, dreht. Die Zeitmessung erfolgt üblicherweise mit Hilfe von Markierungen an einem an der Kurbelwelle angebrachten Geberrad und einem diesen Rad zugeordneten Sensor. Verbrennungsaussetzer führen zu einer vorübergehenden Verlangsamung der Winkelgeschwindigkeit der Kurbelwelle und somit zu einem Anstieg der Differenz aufeinanderfolgender Zeitspannen.

US-A-5 041 980 zeigt ein derartiges Verfahren zum Erkennen von Verbrennungsaussetzern.

In der EP 0 576 705 A1 wird ein Verfahren zur Verbrennungsaussetzererkennung über Schwankungen der Winkelgeschwindigkeit der Kurbelwelle beschrieben, wobei die allgemeine Drehzahltendenz und zusätzlich ungleichmäßige Drehzahländerungen berücksichtigt werden. Das dort beschriebene Verfahren liefert einen Laufunruhewert $LU_n$, der proportional zur Änderung der Winkelgeschwindigkeit der Kurbelwelle ist. Der so erhaltene Laufunruhewert wird anschließend mit einem Grenzwert verglichen und ein Verbrennungsaussetzer erkannt, wenn der Laufunruhewert den Grenzwert überschreitet.

Der Erfindung liegt die Aufgabe zugrunde, ein Verfahren zur Verbrennungsaussetzererkennung bei einer Brennkraftmaschine anzugeben, mit dessen Hilfe auch der Übergangsbereich zwischen stabiler Verbrennung und dem ersten Auftreten von Verbrennungsaussetzern sicher erkannt werden kann.

Diese Aufgabe wird erfindungsgemäß durch die Merkmale des Patentanspruches 1 gelöst. Vorteilhafte Weiterbildungen sind in den abhängigen Ansprüchen angegeben.

Durch statistische Auswertung von Laufunruhewerten, die aus Schwankungen der Winkelgeschwindigkeit der Kurbelwelle nach einem beliebigen Verfahren ermittelt werden, wird eine Größe abgeleitet, die proportional zu den zyklischen Verbrennungsschwankungen ist. Damit kann der Übergangsbereich zwischen stabiler Verbrennung und dem ersten Auftreten von Verbrennungsaussetzern sicher erkannt werden.

Ein Ausführungsbeispiel der Erfindung ist im folgenden unter Bezugnahme auf die Zeichnungen näher erläutert. Es zeigen:

Figur 1: ein Ablaufdiagramm zur Bestimmung eines Laufunruhewertes,

Figur 2: ein Ablaufdiagramm zur Erkennung des Übergangsbereiches zwischen stabiler Verbrennung und dem ersten Auftreten von Verbrennungsaussetzern,

Figur 3: ein Blockschaltbild einer Einrichtung mit den Meßstellen und Stellgliedern zur Durchführung des Verfahrens und

Figur 4: den Verlauf eines Abstandswertes und eines Schwankungsmaßes für den indizierten Mitteldruck bei verschiedenen Abgasrückführraten.

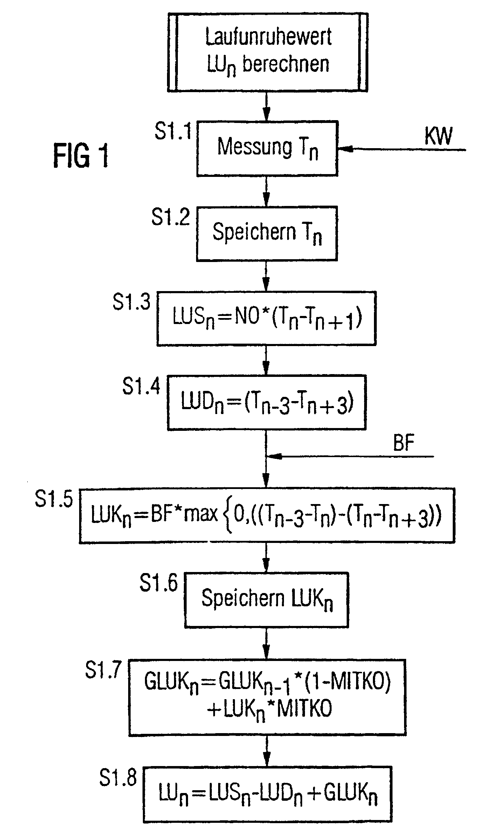

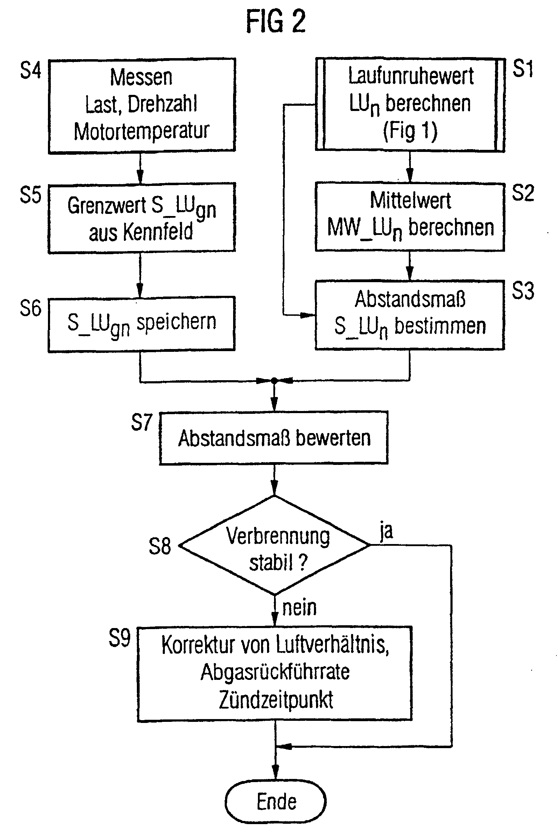

In einem Unterprogrammschritt S1 erfolgt eine Berechnung eines Laufunruhewertes, wozu z.B. ein Verfahren verwendet werden kann, wie es in der eingangs genannten Schrift EP 0 576 705 A1 beschrieben und anhand des Ablaufdiagramms nach Figur 1 erläutert ist.

Im Verfahrensschritt S1.1 werden anhand von Markierungen auf der Kurbelwelle die Zeitspannen $T_n$ gemessen, die die Kurbelwelle benötigt, um sich während des Arbeitstakts eines Zylinders um einen bestimmten Kurbelwinkel zu drehen, bei einer 4-Zylinder-Brennkraftmaschine also 180° Kurbelwinkel KW.

Die laufend gemessenen Werte werden im Verfahrensschritt S1.2 zwischengespeichert.

Im Verfahrensschritt S1.3 wird aus jeweils zwei aufeinanderfolgenden Zeitspannen $T_n$, $T_{n+1}$ die statische Komponente $LUS_n$ berechnet.

Der hier verwendete Normierungsfaktor NO ist abhängig vom Meßfenster (n-x bis n+y), das im Verfahrensschritt S1.4 bei der Berechnung der dynamischen Komponente Verwendung findet. Er berechnet sich nach der Gleichung NO = x+y, also hier im Ausführungsbeispiel NO = 3+3 = 6.

Im Verfahrensschritt S1.4 wird die dynamische Komponente $LUD_n$ berechnet, indem die Differenz weiter auseinanderliegender Zeitspannen gebildet wird. Hier im Ausführungsbeispiel wird die drittvorletzte $T_{n-3}$ bzw. die drittnächste $T_{n+3}$ Zeitspanne bezogen auf die aktuelle Zeitspanne $T_n$ verwendet. Es könnte hier auch ein bzgl. der aktuellen Zeitspanne Tn unsymmetrisch gelegtes Meßfenster verwendet werden. Die dynamische Komponente $LUD_n$ wird anschließend negiert.

Im Verfahrensschritt S1.5 wird eine Änderungskomponente $LUK_n$ berechnet. Es werden symmetrisch zur aktuellen Zeitspanne $T_n$ zwei Differenzwerte gebildet, hier im Ausführungsbeispiel $T_{n-3} - T_n$ und $T_n - T_{n+3}$. Aus diesen zwei Werten wird wiederum eine Differenz gebildet und diese, sofern sie größer Null ist, mit einem Bewertungsfaktor BF gewichtet. Ist diese Differenz kleiner Null, so wird sie zu Null gesetzt.

Die so berechnete Änderungskomponente $LUK_n$ wird im Verfahrensschritt S1.6 zwischengespeichert, um sie im Verfahrensschritt S1.7 einer gleitenden Mittelung zu unterziehen, hier beispielsweise nach der Formel: $GLUK_n = GLUK_{n-1} * (1-MITKO) + LUK_n * MITKO$, wobei MITKO eine Mittelungskonstante mit einem Wertebereich zwischen 0 und 1 darstellt.

Die Meßfenster (n, n-x, n+y, n-z, n+z) bei der Berechnung der dynamischen Komponente und der Änderungskomponente werden vorteilhafterweise so gewählt, daß bei den entsprechenden Zylindern n, n-x, n+y, n-z, n+z die Zeitspanne desselben mechanischen Segments der Kurbelwelle gemessen wird. Eine eventuell vorhandene Ungleichheit der Größe der einzelnen Kurbelwellensegmente verursacht dann keinen Meßfehler.

Aus diesen einzelnen Komponenten wird nun im Verfahrensschritt S1.8 der Laufunruhewert $LU_n$ für die betrachtete Zeitspanne $T_n$ durch eine Addition der einzelnen Komponenten gebildet.

Dieser Laufunruhewert $LU_n$ wird gemäß den weiteren Verfahrensschritten zur Ermittlung einer Größe herangezogen, die proportional zu den zyklischen Verbrennungsschwankungen ist. Als Ausgangsgröße für die weitere Verarbeitung kann aber jede Art von Laufunruhewert verwendet werden, der proportional zur Änderung der Winkelgeschwindigkeit der Kurbelwelle ist und nach einem beliebigen, bekannten Verfahren gewonnen wird.

Im Verfahrensschritt S2 wird zunächst ein Mittelwert $MW\_LU_n$ der Laufunruhewerte $LU_n$ aufeinanderfolgender Verbrennungszyklen für jeden Zylinder individuell berechnet. Die Berechnung kann nach verschiedenen Gleichungen erfolgen:

a)

$$MW\_LU_n = MW\_LU_{n_{alt}} + (LU_n - MW\_LU_{n_{alt}})\frac{1}{i}$$

b)

$$MW\_LU_n = \frac{1}{i}\sum_{j=1}^{i} LU_{nj}$$

c)

$$MW\_LU_n = i\sqrt{LU_{n1}LU_{n2}...LU_{ni}}$$

mit n = Zylindersegment, j=Verbrennungszyklus, i=Anzahl der Zyklen

Durch die Bestimmung eines Abstandsmaßes $S\_LU_n$ erfolgt ein Vergleich des aktuellen Laufunruhewertes $LU_n$ mit dem Mittelwert $MW\_LU_n$ für den jeweiligen Zylinder. Dieses Abstandsmaß kann als Wert, der proportional zu den zyklischen Verbrennungsschwankungen ist, herangezogen werden. Das Abstandsmaß $S\_LU_n$ im Verfahrensschritt S3 kann nach verschiedenen Berechnungsvorschriften bestimmt werden:

a)

$$S\_LU_n = \sqrt{\frac{1}{i-1}(\Sigma LU_n^2 - MW\_LU_n\Sigma LU_n)}$$

b)

$$S\_LU_n = MW\_LU_n^2 - LU_n^2$$

c)

$$S\_LU_n = |MW\_LU_n| - |LU_n|$$

d)

$$S\_LU_n = |MW\_LU_n - LU_n|$$

e)

$$S\_LU_n = \sqrt{|MW\_LU_n^2 - LU_n^2|}$$

mit n=Zylindersegment, i=Zyklenanzahl

Als Mittelwert $MW\_LU_n$ in diesen Berechnungsvorschriften kann dabei jeder der oben beschriebenen Mittelwerte benutzt werden.

Zur Bewertung, ob die zyklischen Verbrennungsschwankungen einen zulässigen Grenzwert überschritten haben, erfolgt ein Vergleich des Abstandsmaßes $S\_LU_n$ mit einem zylinderindividuellen Grenzwert $S\_LU_{gn}$ im Verfahrensschritt S7. Parallel zur Berechnung des Laufunruhewertes, des Mittelwertes und des Abstandsmaßes in den Verfahrensschritten S1-S3 werden die Betriebsparameter Drehzahl, Last und Temperatur der Brennkraftmaschine gemessen (Verfahrensschritt S4). In Abhängigkeit von diesen Werten werden aus Kennfeldern eines Speichers der elektronischen Steuerungseinrichtung der Brennkraftmaschine die zugehörigen Grenzwerte $S\_LUg_n$ ausgelesen und gespeichert (Verfahrensschritte S5 und S6). Die Bewertung des Abstandsmaßes und die anschließende Abfrage, ob der Verbrennungsvorgang noch stabil abläuft ( Verfahrensschritte S7 und S8), kann auf verschiedene Weise erfolgen:

a) Ist das Abstandsmaß $S\_LU_n$ größer als der Grenzwert $S\_LU_{gn}$, so wird festgestellt, daß die zyklischen Verbrennungsschwankungen einen bestimmten Wert überschritten haben und die Verbrennung instabil wird. Andernfalls wird eine stabile Verbrennung registriert und das Verfahren ist zu Ende.

b) Die Differenz des Abstandsmaßes $S\_LU_n$ zu dem Grenzwert $S\_LU_{gn}$ wird nach der Gleichung $D\_LU_n=S\_LU_{gn}-S\_LU_n$ gebildet. Hierdurch ist neben der Erkennung des Überganges von stabilen zu instabilen Verbrennungen eine Wichtung der Stärke der zyklischen Verbrennungsschwankungen möglich.

c) Es wird der Quotient aus dem Abstandsmaß $S\_LU_n$ und dem Grenzwert $S\_LU_{gn}$ nach der Gleichung $Q\_LU_n=|S\_LU_n|/S\_LU_{gn}$ gebildet. Ist dieser Quotient kleiner oder gleich 1, so ist die Verbrennung stabil. Ist der Wert größer 1, so wird die Verbrennung als instabil erkannt. Aus dem Wert des Quotienten ist eine Wichtung der Stärke der zyklischen Verbrennungsschwankungen möglich.

d) Eine weitere Möglichkeit zur Wichtung bietet eine statistische Auswertung der Anzahl der Grenzwertüberschreitungen (Grenzwert $S\_LU_{gn}$) des Abstandsmaßes $S\_LU_n$. Hierbei wird die Verbrennung erst dann als instabil bewertet, wenn die statistische Häufigkeit der Grenzwertüberschreitungen eine bestimmte Grenze überschreitet.

Wird eine Verbrennung als instabil erkannt, d. h. übersteigen die zyklischen Verbrennungsschwankungen ein festgelegtes Maß, so erfolgt eine Stabilisierung der Verbrennung durch einen entsprechenden Eingriff in die Zündung, in das Luftverhältnis oder in die Abgasrückführung (Verfahrensschritt S9). So kann z.B. bei Brennkraftmaschinen mit Abgasrückführung bei Erkennung von instabilen Verbrennungen die Rückführrate verringert oder der Zündwinkel in Richtung spät verstellt werden. Bei Maschinen, die mit magerem Gemisch betrieben werden, führt eine Anfettung des Gemisches oder eine Zündwinkelverstellung zu einer Stabilisierung der Verbrennung. Erfolgt neben der eigentlichen Erkennung instabiler Verbrennungen eine Wichtung der Stärke der zyklischen Schwankungen, so kann diese Wichtung als Eingangsgröße für eine Regelung der Abgasrückführrate, des Luftverhältnisses oder des Zündwinkels herangezogen werden.

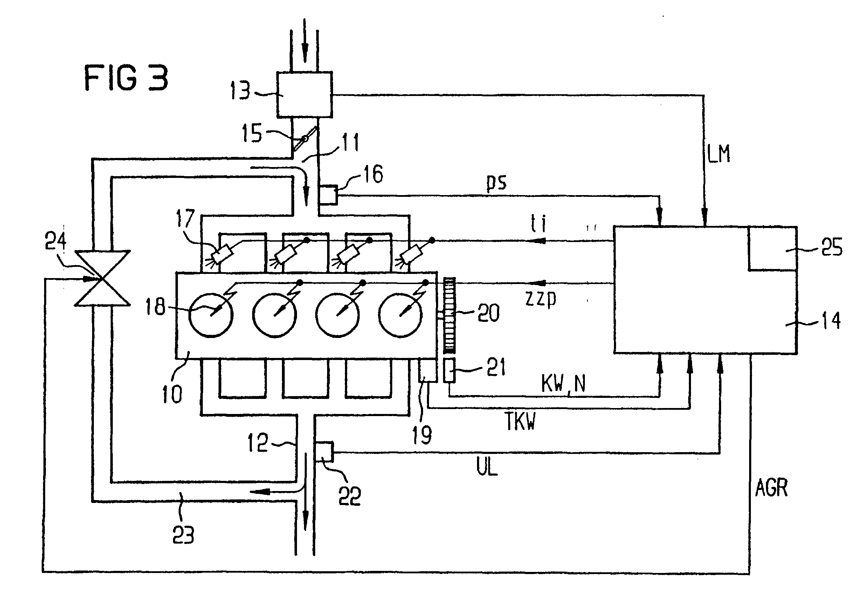

In Figur 3 ist ein Blockschaltbild einer Einrichtung zur Durchführung des erfindungsgemäßen Verfahrens zur Erkennung von Verbrennungsschwankungen dargestellt. Es zeigt einen Motorblock 10 mit vier nicht näher bezeichneten Zylindern einer Brennkraftmaschine mit einem daran angeschlossenen Ansaugtrakt 11 mit einer der Zylinderzahl entsprechenden Anzahl von Einzelsaugrohren und einem Abgastrakt 12. In dem Ansaugtrakt 11 ist ein Luftmassenmesser 13 angeordnet, der ein Ausgangssignal LM entsprechend der angesaugten Luft an eine elektronische Steuerungseinrichtung 14 abgibt. Desweiteren ist im Ansaugtrakt eine zur Füllungssteuerung dienende Drosselklappe 15, sowie ein Sensor 16 zur Erfassung des Ansaugdruckes ps angeordnet. Jedem der Zylinder der Brennkraftmaschine ist ein Einspritzventil 17, das jeweils über entsprechende Einspritzimpulse ti angesteuert werden kann, sowie eine Zündeinrichtung 18, die in der Figur nur symbolisch dargestellt ist und deren Zündzeitpunkt ZZP ebenfalls über Signale der Steuerungseinrichtung 14 eingestellt werden kann, zugeordnet.

An der Brennkraftmaschine ist ferner an geeigneter Stelle ein Sensor 19 zum Erfassen der Temperatur des Motorblocks 10 oder der Temperatur des Kühlmittels TKW angeordnet. Mit der Kurbelwelle der Brennkraftmaschine ist ein Geberrad 20 mit Markierungen verbunden, die von einem Sensor 21 abgetastet werden, der ein der Drehzahl N und dem absoluten Kurbelwinkel entsprechendes Signal KW an die Steuerungseinrichtung 14 abgibt.

Im Abgastrakt 12 ist eine Lambdasonde 22 angeordnet, die ein dem Restsauerstoffgehalt im Abgas ensprechendes Signal UL an die die Steuerungseinrichtung 14 abgibt. Von dem Abgastrakt 12 zweigt eine Leitung 23 ab, die stromabwärts der Drosselklappe 15 in den Ansaugtrakt 11 mündet, wodurch in bestimmten Betriebspunkten der Brennkraftmaschine Abgas zurückgeführt und der Frischluft beigemischt werden kann. Mit Hilfe eines in diese Leitung 23 eingefügten, über Steuersignale von der Steuerungseinrichtung 14 aktivierbaren Abgasrückführventils 24 läßt sich die Menge des rückgeführten Abgases, d.h. die Abgasrückführrate AGR einstellen.

Kernstück der Steuerungseinrichtung 14 ist ein Mikrocomputer, der nach festgelegten Programmen alle für den Betrieb der Brennkraftmaschine erforderlichen Funktionen steuert. Eine Programmroutine führt das beschriebene Verfahren zur Erkennung von Verbrennungsschwankungen aus. In einem Speicher 25 der Steuerungseinrichtung 14 sind die hierzu nötigen Kennfelder abgelegt.

Ein Beispiel für den Verlauf eines Abstands-

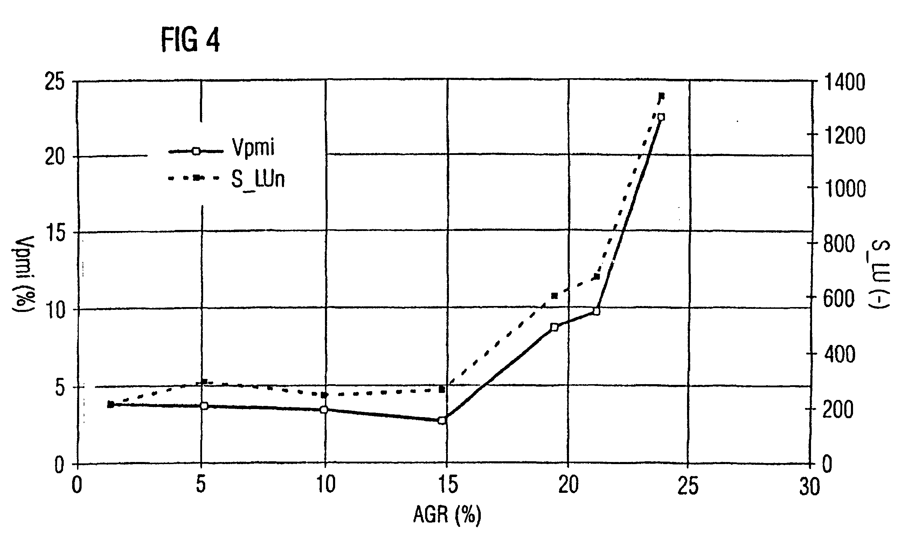

maßes (hier S_LU$_n$ nach der Berechnungsvorschrift a) mit einem Mittelwert MW_LU$_n$ der nach Gleichung b) ermittelt wurde), bei verschiedenen Abgasrückführraten zeigt Fig.4. Gleichzeitig ist der Verlauf eines Schwankungsmaßes des indizierten Mitteldruckes aufgetragen. Bei hohen Rückführraten steigen sowohl die Mitteldruckschwankungen, als auch die Abstandsmaße an. Dieser Anstieg ist auf eine Zunahme der zyklischen Verbrennungsschwankungen zurückzuführen.

**Patentansprüche**

1. Verfahren zum Erkennen von zyklischen Verbrennungsschwankungen bei mehrzylindrigen Brennkraftmaschinen mit folgenden Schritten

    - Ermitteln eines Laufunruhewertes (LU$_n$) für jeden Zylinder der Brennkraftmaschine, der proportional zur Änderung der Winkelgeschwindigkeit der Kurbelwelle ist,

    - Berechnen eines Mittelwertes (MW_LU$_n$) aus Laufunruhewerten aufeinanderfolgender Verbrennungszyklen individuell für jeden Zylinder,

    - Bestimmen eines Abstandsmaßes (S_LU$_n$), das proportional zu den zyklischen Verbrennungsschwankungen ist durch Vergleich des aktuellen Laufunruhewertes (LU$_n$) mit dem zugehörigen Mittelwert (MW_LU$_n$) für den jeweiligen Zylinder,

    - Vergleich des Abstandsmaßes (S_LU$_n$) mit einem zylinderindividuellen von Betriebsparametern der Brennkraftmaschine abhängigen Grenzwert (S_LU$_{gn}$) und

    - Erkennen von zyklischen Verbrennungsschwankungen, wenn das Ergebnis des Vergleiches eine vorgegebene Bedingung nicht erfüllt.

2. Verfahren nach Anspruch 1, **dadurch gekennzeichnet, daß** die Berechnung des Mittelwertes (MW_LU$_n$) nach folgender Gleichung erfolgt:

$$MW\_LU_n = MW\_LU_{nalt} + (LU_n - MW\_LU_{nalt})\frac{1}{i}$$

mit:

   i = Anzahl der Verbrennungszyklen
   n = Laufvariable Zylindersegment

3. Verfahren nach Anspruch 1, **dadurch gekennzeichnet, daß** die Berechnung des Mittelwertes (MW_LU$_n$) nach folgender Gleichung erfolgt:

$$MW\_LU_n = \frac{1}{i} \sum_{j=1}^{i} LU_{nj}$$

mit:

   i = Anzahl der Verbrennungszyklen
   n = Laufvariable Zylindersegment
   j = Laufvariable Verbrennungszyklus

4. Verfahren nach Anspruch 1, **dadurch gekennzeichnet, daß** die Berechnung des Mittelwertes (MW_LU$_n$) nach folgender Gleichung erfolgt:

$$MW\_LU_n = \sqrt[i]{LU_{n1} LU_{n2} ... LU_{ni}}$$

mit:

   i = Anzahl der Verbrennungszyklen

   n = Laufvariable Zylindersegment

5. Verfahren nach Anspruch 1, **dadurch gekennzeichnet, daß** der Abstandswert (S_LU$_n$) nach folgender Berechnungsvorschrift bestimmt wird:

$$S\_LU_n = \sqrt{\frac{1}{i-1}(\Sigma LU_n^2 - MW\_LU_n \Sigma LU_n)}$$

mit:

   i = Anzahl der Verbrennungszyklen
   n = Laufvariable Zylindersegment

6. Verfahren nach Anspruch 1, **dadurch gekennzeichnet, daß** das Abstandsmaß (S_LU$_n$) nach folgender Berechnungsvorschrift bestimmt wird:

$$S\_LU_n = MW\_LU_n^2 - LU_n^2$$

mit: n = Laufvariable Zylindersegment

7. Verfahren nach Anspruch 1, **dadurch gekennzeichnet, daß** das Abstandsmaß (S_LU$_n$) nach folgender Berechnungsvorschrift bestimmt wird:

$$S\_LU_n = |MW\_LU_n| - |LU_n|$$

mit: n = Laufvariable Zylindersegment

8. Verfahren nach Anspruch 1, **dadurch gekenn-**

**zeichnet, daß** das Abstandsmaß (S_LU$_n$) nach folgender Berechnungsvorschrift bestimmt wird:

$$S\_LU_n = |MW\_LU_n - LU_n|$$

mit: n = Laufvariable Zylindersegment

9. Verfahren nach Anspruch 1, **dadurch gekennzeichnet, daß** das Abstandsmaß (S_LU$_n$) nach folgender Berechnungsvorschrift bestimmt wird:

$$S\_LU_n = \sqrt{|MW\_LU_n^2 - LU_n^2|}$$

mit: n = Laufvariable Zylindersegment

10. Verfahren nach Anspruch 1, **dadurch gekennzeichnet, daß** zyklische Verbrennungsschwankungen erkannt werden, wenn der Abstandswert (S_LU$_n$) den Grenzwert (S_LU$_{gn}$) überschreitet.

11. Verfahren nach Anspruch 1, **dadurch gekennzeichnet, daß** die Differenz des Abstandswertes (S_LU$_n$) zu dem Grenzwert (S_LU$_{gn}$) gebildet wird und zyklische Verbrennungsschwankungen erkannt werden, wenn die Differenz einen weiteren, vorgegebenen Grenzwert überschreitet.

12. Verfahren nach Anspruch 1, **dadurch gekennzeichnet, daß** der Quotient aus dem Abstandswert (S_LU$_n$) und dem Grenzwert (S_LU$_{gn}$) nach der Gleichung Q_LU$_n$=|S_LU$_n$|/S_LU$_{gn}$ gebildet wird und zyklische Verbrennungsschwankungen erkannt werden, wenn dieser Quotient einen Wert größer 1 aufweist.

13. Verfahren nach Anspruch 1, **dadurch gekennzeichnet, daß** eine instabile Verbrennung aufgrund zyklischer Verbrennungsschwankungen erst dann registriert wird, wenn die statistische Häufigkeit der Grenzwertüberschreitungen des Abstandswertes eine bestimmte Grenze überschreitet.

14. Verfahren nach Anspruch 1, **dadurch gekennzeichnet, daß** die zylinderindividuellen Grenzwerte (S_LU$_{gn}$) abhängig von Betriebsparametern der Brennkraftmaschine in Kennfeldern eines Speichers einer Steuerungseinrichtung abgelegt sind.

15. Verfahren nach einem der vorhergehenden Ansprüche, **dadurch gekennzeichnet, daß** bei Erkennen von zyklischen Verbrennungsaussetzern steuernde Maßnahmen zur Herbeiführung einer stabilen Verbrennung, insbesondere Verstellung des Zündzeitpunktes und/oder Verändern des Luftverhältnisses und/oder der Abgasrückführrate, ergriffen werden.

**Claims**

1. Method for detecting cyclical combustion fluctuations in multi-cylinder internal combustion engines using the following steps

   - Determining an uneven running value (LU$_n$) for each cylinder of the internal combustion engine which is proportional to the variation in the angular velocity of the crankshaft,

   - Calculating an average value (MW_LU$_n$) from uneven running values of consecutive combustion cycles individually for each cylinder,

   - Determining an interval size (S_LU$_n$) proportional to the cyclical combustion fluctuations by comparing the current uneven running value (LU$_n$) with the associated average value (MW_LU$_n$) for the relevant cylinder,

   - Comparing the interval size (S_LU$_n$) with a cylinder-specific limit value (S_LU$_{gn}$) dependent on operating parameters of the internal combustion engine, and

   - Detecting cyclical combustion fluctuations if the result of the comparison does not fulfil a predefined condition.

2. Method according to Claim 1, **characterised in that** the average value (MW_LU$_n$) is calculated according to the following equation:

$$MW\_LU_n = MW\_LU_{nold} + (LU_n - MW\_LU_{nold})\frac{1}{i}$$

where:

   i = number of combustion cycles,
   n = cylinder segment control variable

3. Method according to Claim 1, **characterised in that** the average value (MW_LU$_n$) is calculated according to the following equation:

$$MW\_LU_n = \frac{1}{i}\sum_{j=1}^{i} LU_{nj}$$

where:

   i = number of combustion cycles
   n = cylinder segment control variable
   j = combustion cycle control variable

**4.** Method according to Claim 1, **characterised in that** the average value (MW_LU$_n$) is calculated according to the following equation:

$$MW\_LU_n = i\sqrt{LU_{n_1}LU_{n_2}...LU_{ni}}$$

where:

i = number of combustion cycles
n = cylinder segment control variable

**5.** Method according to Claim 1, **characterised in that** the interval size (S_LU$_n$) is determined in accordance with the following calculation rule:

$$S\_LU_n = \sqrt{\frac{1}{i-1}(\Sigma LU_n^2 - MW\_LU_n \Sigma LU_n)}$$

where:

i = number of combustion cycles
n = cylinder segment control variable

**6.** Method according to Claim 1, **characterised in that** the interval size (S_LU$_n$) is determined in accordance with the following calculation rule:

$$S\_LU_n = MW\_LU_n^2 - LU_n^2$$

where: n = cylinder segment control variable

**7.** Method according to Claim 1, **characterised in that** the interval size (S_LU$_n$) is determined in accordance with the following calculation rule:

$$S\_LU_n = |MW\_LU_n| - |LU_n|$$

where: n = cylinder segment control variable

**8.** Method according to Claim 1, **characterised in that** the interval size (S_LU$_n$) is determined in accordance with the following calculation rule:

$$S\_LU_n = |MW\_LU_n - LU_n|$$

where: n = cylinder segment control variable

**9.** Method according to Claim 1, **characterised in that** the interval size (S_LU$_n$) is determined in accordance with the following calculation rule:

$$S\_LU_n = \sqrt{|MW\_LU_n^2 - LU_n^2|}$$

where: n = cylinder segment control variable

**10.** Method according to Claim 1, **characterised in that** cyclical combustion fluctuations are detected if the interval size (S_LU$_n$) exceeds the limit value (S_LU$_{gn}$).

**11.** Method according to Claim 1, **characterised in that** the difference between the interval size (S_LU$_n$) and the limit value (S_LU$_{gn}$) is formed and cyclical combustion fluctuations detected if the difference exceeds a further, predefined limit value.

**12.** Method according to Claim 1, **characterised in that** the quotient of the interval size (S_LU$_n$) and the limit value (S_LU$_{gn}$) is formed in accordance with the equation Q_LU$_n$=|S LU$_n$|/S_LU$_{gn}$ and cyclical combustion fluctuations are detected if this quotient has a value greater than 1.

**13.** Method according to Claim 1, **characterised in that** unstable combustion caused by cyclical combustion fluctuations is only registered if the statistical frequency of the limit value overshoots of the interval size exceeds a defined limit.

**14.** Method according to Claim 1, **characterised in that** the cylinder-specific limit values (S_LU$_{gn}$) are stored in engine maps of a memory of a control device as a function of operating parameters of the internal combustion engine.

**15.** Method according to one of the preceding claims, **characterised in that**, if cyclical misfires are detected, control action is taken to bring about stable combustion, in particular adjustment of the ignition timing and/or changing of the fuel/air ratio and/or of the exhaust gas recirculation rate.

**Revendications**

**1.** Procédé pour la détection de fluctuations cycliques de combustion dans des moteurs multicylindres à combustion interne, comprenant les étapes suivantes:

- détermination d'une valeur pour chaque cylindre du moteur à combustion interne, cette valeur étant proportionnelle à la variation de la vitesse angulaire du vilebrequin,
- calcul d'une valeur moyenne (MW_LU$_n$)à partir des valeurs d'inégalité rotative de cycles de combustion successifs, individuellement pour chaque cylindre,
- détermination d'une mesure de distance (S_LU$_n$), proportionnelle aux fluctuations cycliques de combustion, par comparaison de la valeur actuelle d'inégalité rotative ($LU_n$) avec la valeur moyenne ($MW\_LU_n$) correspondante pour chaque cylindre,

- comparaison de la mesure de distance ($S\_LU_n$) avec une valeur limite ($S\_LU_{gn}$) individuelle d'un cylindre et dépendant de paramètres fonctionnels du moteur à combustion interne, et
- constatation de fluctuations cycliques de combustion si le résultat de la comparaison ne remplit pas une condition préétablie.

2. Procédé selon la revendication 1, **caractérisé en ce que** le calcul de la moyenne (MW LUn) est effectué selon l'équation suivante:

$$MW\_LU_n = MW\_LU_{nalt} + (LU_n - MW\_LU_{nalt})\frac{1}{i}$$

dans laquelle: i = nombre de cycles de combustion; n = variable de fonction: segment de cylindre.

3. Procédé selon la revendication 1, **caractérisé en ce que** le calcul de la moyenne ((MW LU$_n$) est effectué selon l'équation suivante:

$$MW\_LU_n = \frac{1}{i}\sum_{j=1}^{i} LU_{nj}$$

dans laquelle:

i = nombre de cycles de combustion
n = variable fonctionnelle: segment de cylindre
j = variable fonctionnelle: cycle de combustion.

4. Procédé selon la revendication 1, **caractérisé en ce que** le calcul de la moyenne ((MW\_LU$_n$) est effectué selon l'équation suivante:

$$MW\_LU_n = \sqrt[i]{LU_{n_1} LU_{n_2} \ldots LU_{ni}}$$

dans laquelle:

i = nombre de cycles de combustion
n = variable fonctionnelle: segment de cylindre.

5. Procédé selon la revendication 1, **caractérisé en ce que** la valeur de distance ($S\_LU_n$) est déterminée selon la règle de calcul suivante:

$$S\_LU_n = \sqrt{\frac{1}{i-1}(\Sigma LU_n^2 - MW\_LU_n \Sigma LU_n)}$$

dans laquelle:

i = nombre de cycles de combustion
n = variable fonctionnelle: segment de cylindre.

6. Procédé selon la revendication 1, **caractérisé en ce que** la valeur de distance ($S\_LU_n$) est déterminée selon la règle de calcul suivante:

$$S\_LU_n = MW\_LU_n^2 - LU_n^2$$

dans laquelle n = variable fonctionnelle: segment de cylindre.

7. Procédé selon la revendication 1, **caractérisé en ce que** la valeur de distance ($S\_LU_n$) est déterminée selon la règle de calcul suivante:

$$S\_LU_n = |MW\_LU_n| - |LU_n|$$

dans laquelle n = variable fonctionnelle: segment de cylindre.

8. Procédé selon la revendication 1, **caractérisé en ce que** la valeur de distance ($S\_LU_n$) est déterminée selon la règle de calcul suivante:

$$S\_LU_n = |MW\_LU_n - LU_n|$$

dans laquelle n = variable fonctionnelle: segment de cylindre.

9. Procédé selon la revendication 1, **caractérisé en ce que** la valeur de distance ($S\_LU_n$) est déterminée selon la règle de calcul suivante:

$$S\_LU_n = \sqrt{|MW\_LU_n^2 - LU_n^2|}$$

dans laquelle n = variable fonctionnelle: segment de cylindre.

10. Procédé selon la revendication 1, **caractérisé en ce que** des fluctuations cycliques de combustion sont détectées lorsque la valeur de distance ($S\_LU_n$) dépasse la valeur limite ($S\_LU_{gn}$).

11. Procédé selon la revendication 1, **caractérisé en ce que** la différence entre la valeur de distance ($S\_LU_n$) et la valeur limite ($S\_LU_{gn}$) est calculée et des fluctuations cycliques de combustion sont détectées lorsque la différence dépasse une autre valeur limite prédéterminée.

12. Procédé selon la revendication 1, **caractérisé en**

ce qu'un forme le quotient de la valeur de distance ($S\_LU_n$) et de la valeur limite ($S\_LU_{gn}$) selon l'équation $Q\_LU_n = |S\_LU_n|/S\_LU_{gn}$, et des fluctuations cycliques de combustion sont détectées lorsque ce quotient a une valeur plus grande que 1.

13. Procédé selon la revendication 1, **caractérisé en ce qu'**une combustion instable par suite de fluctuations cycliques de combustion n'est enregistrée que lorsque la fréquence statistique des dépassements de la valeur limite par la valeur de distance dépasse une certaine limite.

14. Procédé selon la revendication 1, **caractérisé en ce que** les valeurs limites individuelles par cylindre ($S\_LUgn$) en fonction de paramètres opérationnels du moteur à combustion interne sont enregistrées dans des diagrammes caractéristiques d'une mémoire d'un dispositif de commande.

15. Procédé selon l'une des revendications précédentes, **caractérisé en ce que** des mesures dirigées vers l'établissement d'une combustion stable sont appliquées, en particulier l'ajustage du point d'allumage et/ou une modification du rapport d'air et/ou une modification du taux de recyclage de l'échappement, lorsque des ratés cycliques de combustion sont détectés.

**FIG 1**

$$\text{Laufunruhewert } LU_n \text{ berechnen}$$

S1.1 $\quad$ Messung $T_n$ $\quad\longleftarrow$ KW

S1.2 $\quad$ Speichern $T_n$

S1.3 $\quad LUS_n = NO*(T_n - T_{n+1})$

S1.4 $\quad LUD_n = (T_{n-3} - T_{n+3})$

BF

S1.5 $\quad LUK_n = BF*\max\left\{0, ((T_{n-3} - T_n) - (T_n - T_{n+3}))\right\}$

S1.6 $\quad$ Speichern $LUK_n$

S1.7 $\quad GLUK_n = GLUK_{n-1}*(1 - MITKO) + LUK_n*MITKO$

S1.8 $\quad LU_n = LUS_n - LUD_n + GLUK_n$

## FIG 2

S4 — Messen Last, Drehzahl Motortemperatur

S1 — Laufunruhewert $LU_n$ berechnen (Fig 1)

S5 — Grenzwert $S\_LU_{gn}$ aus Kennfeld

S2 — Mittelwert $MW\_LU_n$ berechnen

S6 — $S\_LU_{gn}$ speichern

S3 — Abstandsmaß $S\_LU_n$ bestimmen

S7 — Abstandsmaß bewerten

S8 — Verbrennung stabil ?  ja / nein

S9 — Korrektur von Luftverhältnis, Abgasrückführrate Zündzeitpunkt

Ende

# FIG 3

EP 0 868 660 B1

FIG 4

EP 0 868 660 B1